# EUROPEAN PATENT SPECIFICATION

(11) **EP 2 805 024 B1**
(45) Date of publication and mention of the grant of the patent: **15.03.2017**
(21) Application number: 12790924.0
(22) Date of filing: 27.11.2012
(51) Int. Cl.: F01D 11/06, F04D 29/12, F16J 15/34, F16J 15/40

(54) **DRY GAS SEAL FOR SUPERCRITICAL CO2 PUMP-HIGH PRESSURE BUFFER**
TROCKENGASDICHTUNG FÜR EINEN ÜBERKRITISCHEN HOCHDRUCKPUFFER EINER CO2-PUMPE
JOINT À GAZ SEC POUR TAMPON DE HAUTE PRESSION DE POMPE DE CO2 SUPERCRITIQUE

(30) Priority: 05.12.2011 IT CO20110057
(43) Date of publication of application: 26.11.2014
(73) Proprietor: Nuovo Pignone S.p.A., 50127 Florence (IT)
(72) Inventor: DEL VESCOVO, Carlo, I-50127 Florence (IT); RIPA, Donato Antonio, I-50127 Florence (IT); SCIANCALEPORE, Maurizio, I-50127 Florence (IT)
(74) Representative: Illingworth-Law, William Illingworth
(86) International application number: PCT/EP2012/073720
(87) International publication number: WO 2013/083437

(56) References cited:
- EP-A1- 1 326 037
- WO-A1-2011/061142
- WO-A2-2009/143213
- JP-A- 2010 159 634

## Description

### TECHNICAL FIELD

The present invention relates generally to dry gas seals for compressors, pumps and, more specifically, to protect the integrity of the primary dry gas seal during standstill conditions.

### BACKGROUND

EP 1 326 037 A1 discloses an axis seal device according to the preamble of claim 1 provided between a vessel filled with a gas and a rotation axis passing through the vessel.

The application of dry gas seals to centrifugal compressor shaft sealing has dramatically increased in recent years for many reasons. The benefits offered by the use of dry gas seals on a centrifugal compressor include improved compressor reliability and the associated reduction of unscheduled downtime, elimination of seal oil leaking into the compressor and the associated process contamination, elimination of process gas contaminating the seal oil and requiring sour seal oil reclamation through degassing tanks, elimination of costs for replacement and disposal of sour seal oil, reduction of operating costs based on the greater efficiency of a dry gas seal, the reduction of maintenance costs for the simpler dry gas seal system and the reduction of process gas emissions.

Dry gas seal installation is also adoptable for centrifugal pumps associated with liquefied gas. The many benefits of dry gas seals at the running conditions of centrifugal compressors and pumps mask problems associated with the use of dry gas seals on centrifugal compressors and pumps at other operating conditions such as the transient times of startup, shutdown and low-speed idle. The reason dry gas seals are problematic at these times is based on the requirement of a higher than suction pressure barrier gas to prevent contamination of the dry gas seal with particulate or liquid materials. The contamination can arrive, for example, from the untreated process gas or from bearing lubrication oil.

A typical centrifugal compressor utilizing a dry gas seal will divert a portion of the process gas from the high-pressure discharge of the compressor then filter, dry and reduce the pressure of the gas. The clean and dry barrier gas is then injected upstream of the primary seal at a pressure slightly greater than the suction pressure of the compressor. The higher pressure barrier gas prevents the untreated process gas from entering the dry gas seal where contaminates can infiltrate the tight tolerances of the rotating dry gas seal surfaces and cause premature dry gas seal ring failure.

During transient times of operation, the pressure of the process gas from the discharge of the compressor is reduced to the point where it is equal to the suction pressure of the compressor. Consequently, it is no longer possible to use the flow from the discharge of the compressor as a barrier fluid. Upstream of the primary seal, in the seal chamber, there is a pressure very close to the suction pressure of the compressor or pump. Downstream of the primary seal there is a pressure established by a buffer fluid, typically nitrogen or air available at a pressure of four to seven bar. Further, the higher pressure and un-treated process gas permeates the primary dry gas seal, transporting particulate and liquid contamination. This problem is emphasized with carbon dioxide (CO₂) as the process flow. The carbon dioxide (CO₂) expansion through the tight tolerances of the dry gas seal rings can form ice on the seal rings. Subsequently, when the compressor returns to normal operating conditions, the contamination between the dry gas seal rings results in premature wear and failure of the dry gas seal.

Prior attempts to resolve this problem have centered on providing a booster for the process fluid to maintain the barrier gas at the conditions provided during normal operation of the compressor or pump. This solution requires the similar treatment of the process fluid with respect to filtering and heating to prevent contamination of the dry gas seal. Accordingly, market pressure is building for a system and method for preventing the backflow of process fluid, and the associated contaminates, through the dry gas seal during transient operating conditions.

### SUMMARY

The present invention is defined in the accompanying claims.

Systems and methods according to these exemplary embodiment descriptions address the above described needs by providing a small secondary compressor for boosting the pressure of an intermediate buffer gas during operating conditions (i.e., startup, shutdown and low-speed idle) when the fluid pressure from the discharge of the pump is equal to the suction pressure of the area to be sealed by the dry gas seal. A simple control system detects a drop in barrier gas pressure in the dry gas seal (i.e., the trigger signal could be but is not limited to simply the "no running" condition of the turbomachinery) and protects the dry gas seal from icing by closing a valve between the dry gas seal and a flare-safe area and starting the secondary compressor to boost the intermediate buffer gas to a preconfigured pressure based on the pressure of the process fluid in the area to be sealed by the dry gas seal.

According to an exemplary embodiment of a system for assuring a safe working condition of a dry gas seal during standstill operations, a barrier fluid pressure measuring system detects a drop in barrier fluid pressure. The exemplary embodiment continues with a valve connecting the chamber between primary and secondary seal with the flare. Further, the exemplary embodiment continues with a booster compressor for boosting the pressure of an intermediate buffer gas injected into the chamber between the primary and secondary seal. Next the exemplary embodiment comprises a control system for operating the booster compressor based on the measured pressure between the primary and secondary seal.

According to another exemplary embodiment, a method for assuring a safe working condition of a dry gas seal installed on a liquefied gas pump when the pump is in a transient operating condition, is presented. Continuing with the first step of the exemplary method embodiment, the method detects the barrier gas pressure below a preconfigured value. In the next step of the exemplary method embodiment, the method closes a valve connected to the dry gas seal. Further in the exemplary method embodiment, starting a booster compressor associated with an intermediate buffer gas and maintaining said chamber pressure at a preconfigured value.

In a further exemplary embodiment, a liquefied gas pump dry gas seal protection system is described. The exemplary embodiment includes a means to detect when the pressure of the barrier fluid drops below a lower limit. The exemplary embodiment further includes a means to regulate the flow from the dry gas seal to a flare-safe area. Continuing with the exemplary embodiment, included is a means to increase the pressure of an intermediate buffer gas injected into the dry gas seal. Continuing with the exemplary embodiment, included is a means to measure the pressure of the buffer gas. Next in the exemplary embodiment, a means to control the means to regulate flow and means to increase pressure based on the means to measure pressure and a preconfigured pressure value.

### BRIEF DESCRIPTION OF THE DRAWINGS

The accompanying drawings illustrate exemplary embodiments, wherein:
Figure 1 depicts a prior art cross-section view of a dry gas seal and the associated gas support system in an operating condition;
Figure 2 depicts a prior art cross-section view of a dry gas seal and the associated gas support system in a standstill condition;
Figure 3 depicts an exemplary embodiment cross-section view of a dry gas seal and the associated gas support system in an operating condition;
Figure 4 depicts an exemplary embodiment cross-section view of a dry gas seal and the associated gas support system in a standstill condition;
Figure 5 depicts an exemplary embodiment pressure-enthalpy diagram illustrating the gas leakage flow through the primary dry gas seal when the pump is in the operating condition;
Figure 6 depicts a prior art pressure-enthalpy diagram illustrating the gas leakage flow through the primary dry gas seal when the pump is in the standstill condition;
Figure 7 depicts an exemplary embodiment pressure-enthalpy diagram illustrating the gas leakage flow through the primary dry gas seal when the pump is in the standstill condition; and
Figure 8 is a flowchart depicting a method for maintaining sufficient pressure in the chamber between the primary and secondary dry gas seal to prevent contamination of the primary dry gas seal.

### DETAILED DESCRIPTION

The following detailed description of exemplary embodiments refers to the accompanying drawings. The same reference numbers in different drawings identify the same or similar elements. Also, the following detailed description does not limit the invention. Instead, the scope of the invention is defined by the appended claims.

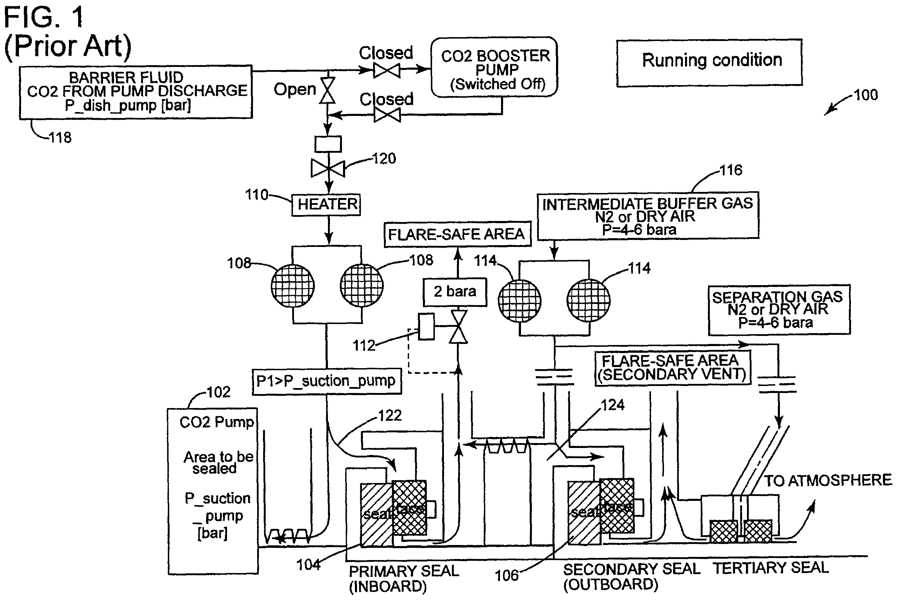

Looking to FIG. 1, a detailed diagram of a prior art exemplary embodiment of a dry gas seal (DGS) system 100 for a carbon dioxide (CO₂) pump is presented. It should be noted in the exemplary embodiment that any fluid in a supercritical state can be used as a barrier fluid in place of the exemplary carbon dioxide (CO₂). The exemplary embodiment reflects the behavior of the dry gas seal during operating conditions and includes a CO₂ pump 102 with its associated area to be sealed, a primary (inboard) seal 104 of a dry gas seal, a secondary (outboard) seal 106 of the dry gas seal, a process fluid filter 108, a process fluid heater 110, a valve and control element 112 for controlling the flow to a flare-safe area, an intermediate buffer gas filter 114, intermediate buffer gas 116, barrier fluid 118, pressure reduction valve 120, a primary dry gas seal chamber 122 and a secondary dry gas seal chamber 124.

In general, this exemplary prior art embodiment depicts process fluid, e.g. carbon dioxide, from the pump discharge being used as a barrier fluid. The pressure of the barrier fluid is reduced by a valve 120 and heated by a heater 110. Continuing with the exemplary prior art embodiment, the barrier fluid is filtered by filters 108 and injected into the primary dry gas seal chamber 122. In the exemplary embodiment, the pressure of the barrier fluid is higher than the suction pressure of the pump and therefore prevents the entry of any untreated process gas into the primary seal 104.

Continuing with the exemplary embodiment, the carbon dioxide (CO₂) barrier fluid flows partly into the pump through the inner labyrinth and partly to the primary vent through the primary dry gas seal. Next in the exemplary embodiment, the carbon dioxide (CO₂) that flows into the pump reaches a suction pressure that is higher than the critical pressure for carbon dioxide (CO₂) and accordingly will not experience icing or flushing. Further in the exemplary embodiment, the carbon dioxide (CO₂) that flows through the primary seal to the primary vent expands from P1 to a value established by the buffer gas (typically N₂/air at 4-7 bar). It should be noted in the exemplary embodiment that the temperature of the carbon dioxide (CO₂) barrier fluid must be maintained, by a heater, to a value high enough to avoid, during the expansion, the risk of icing or flushing.

Continuing with the exemplary embodiment, an intermediate buffer gas 116, e.g. nitrogen or dry air is filtered by filters 114 and injected into the secondary dry gas seal chamber 124. It should be noted in the exemplary embodiment that gases other than nitrogen or air are usable as a buffer gas. In the exemplary embodiment, the pressure of the intermediate buffer gas 116 is higher than the pressure of the barrier gas passing through the primary seal 104 and prevents the barrier gas from reaching the secondary seal 106. In the exemplary embodiment, the mixture of barrier gas 118 and intermediate buffer gas 116 in the secondary dry gas seal chamber 124 passes through a valve 112 and flows to a flare-safe area.

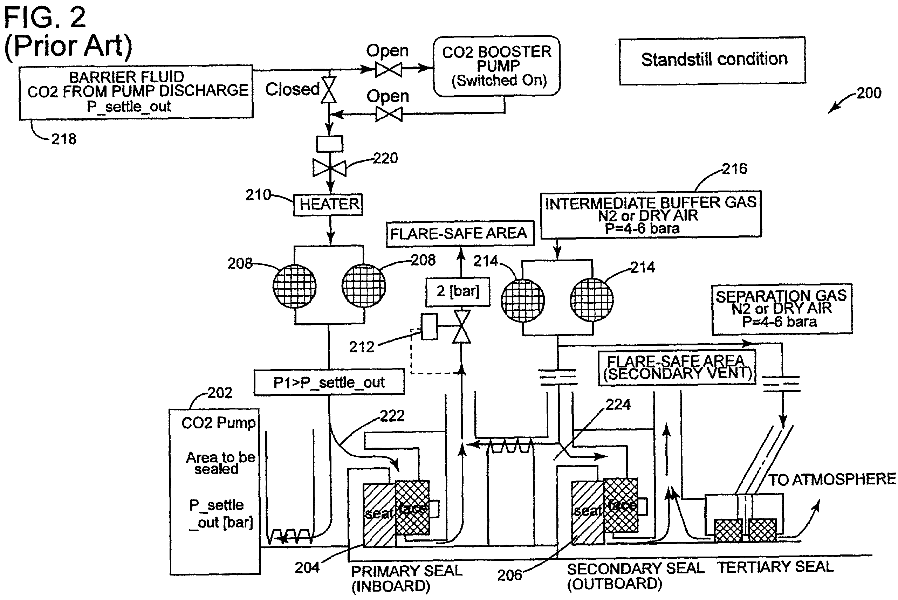

Looking now to FIG. 2, a detailed diagram of a prior art exemplary embodiment of a dry gas seal (DGS) system 200 for a carbon dioxide (CO₂) pump is presented. The prior art exemplary embodiment reflects the behavior of the dry gas seal during a transient, e.g. standstill, condition and includes a CO₂ pump 202 with its associated area to be sealed, a primary (inboard) seal 204 of a dry gas seal, a secondary (outboard) seal 206 of the dry gas seal, a process fluid filter 208, a process fluid heater 210, a valve and control element 212 for controlling the flow to a flare-safe area, an intermediate buffer gas filter 214, intermediate buffer gas 216, barrier fluid 218, pressure reduction valve 220, a primary dry gas seal chamber 222 and a secondary dry gas seal chamber 224.

Continuing with the prior art exemplary embodiment, the CO₂ pump is in a standstill condition and accordingly the discharge pressure from the pump is equal to the pressure in the area to be sealed 202. When the pump is in a standstill condition, the pressure into the pump reaches a uniform value very close to the suction pressure, know as "settle out pressure". It should be noted in the prior art exemplary embodiment that the result of the standstill condition is the process fluid from the pump discharge can no longer act as a barrier fluid to prevent the flow of untreated process fluid, from the area to be sealed 202, into the primary seal 204. Further in the prior art exemplary embodiment, the untreated process fluid is not heated or filtered and therefore contaminates can enter the primary seal 204 and icing can occur in the primary seal 204. It should also be noted in the prior art exemplary embodiment that the pressure of the untreated process fluid is greater than the pressure of the intermediate buffer gas 216 therefore the intermediate buffer gas 216 cannot prevent the flow of untreated process fluid through the primary gas seal 204.

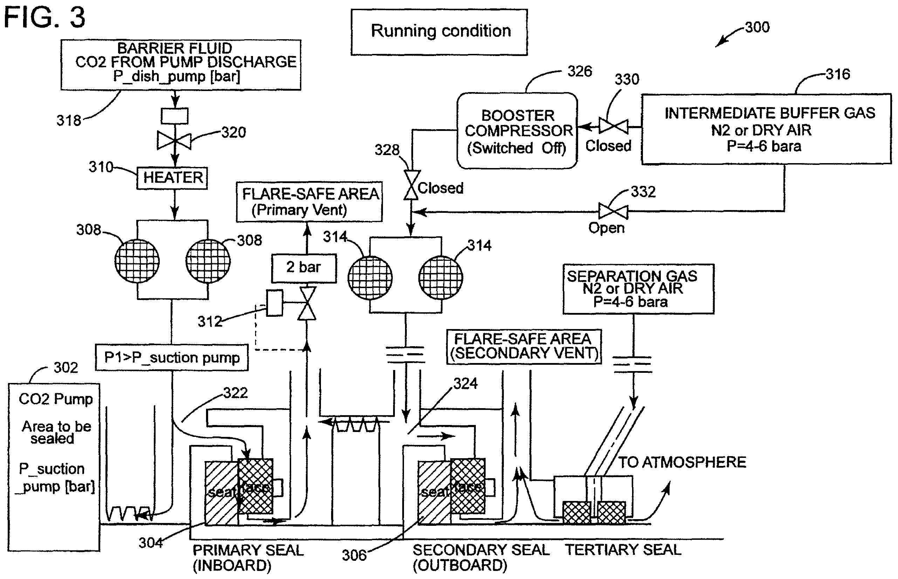

Continuing with FIG. 3, a detailed diagram of an exemplary embodiment of a dry gas seal (DGS) system 300 for a carbon dioxide (CO₂) pump is presented. The exemplary embodiment reflects the behavior of the dry gas seal during a operating, e.g. running, condition and includes a CO₂ pump 302 with its associated area to be sealed, a primary (inboard) seal 304 of a dry gas seal, a secondary (outboard) seal 306 of the dry gas seal, a flare valve 312, and a control element for controlling the flow to a flare-safe area, an intermediate buffer gas filter 314, intermediate buffer gas 316, barrier fluid 318, a primary dry gas seal chamber 322, a secondary dry gas seal chamber 324, a booster compressor 326 and, a booster compressor 326 discharge valve 328, a booster compressor 326 inlet valve 330 and a booster compressor 326 bypass valve 332.

In a non-limiting exemplary embodiment, while the pump is in a running condition, the pressure in the area to be sealed 302 is lower than the pressure of the barrier fluid 318, provided from the pump discharge, and while the barrier fluid pressure is higher than the pressure of the area to be sealed, flare valve 312 and booster compressor 326 bypass valve 332 are open, booster compressor 326 discharge valve 328 and booster compressor 326 inlet valve 330 are closed and booster compressor 326 is deactivated. Continuing with the exemplary embodiment, the pressure of the barrier fluid does not allow the process fluid to flow through the primary seal 304 and prevents contamination and icing of the primary seal 304.

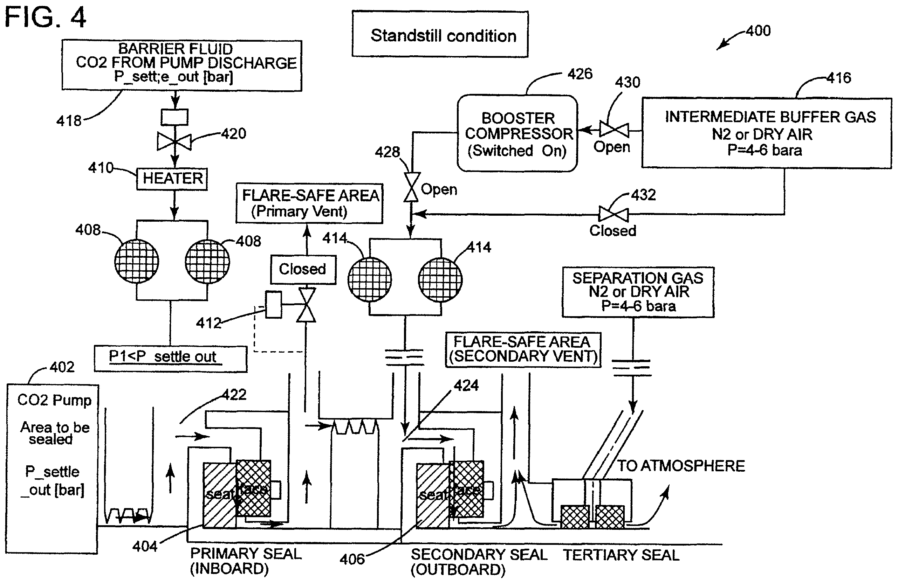

Looking now to FIG. 4, a detailed diagram of an exemplary embodiment of a dry gas seal (DGS) system 400 for a carbon dioxide (CO₂) pump is presented. The exemplary embodiment reflects the behavior of the dry gas seal during a transient, e.g. standstill, condition and includes a CO₂ pump 402 with its associated area to be sealed, a primary (inboard) seal 404 of a dry gas seal, a secondary (outboard) seal 406 of the dry gas seal, a valve 412, and control element, for controlling the flow to a flare-safe area, an intermediate buffer gas filter 414, intermediate buffer gas 416, barrier fluid 418, a primary dry gas seal chamber 422, a secondary dry gas seal chamber 424, a booster compressor 426, a booster compressor 426 discharge valve 428, a booster compressor 426 inlet valve 430 and a booster compressor 426 bypass valve 432.

In a non-limiting exemplary embodiment, in "no running" conditions of the pump or compressor (trip, shutdown, startup, pressurized standstill, etc.), the pressure into the pump is uniform and is equal to the settle out pressure value and can no longer be used as a barrier fluid. In this exemplary embodiment condition, the flare valve 412 and the booster compressor 426 bypass valve 432 is closed, the booster compressor 426 discharge valve 428 and the booster compressor 426 inlet valve 430 is opened and the booster compressor 426 is activated. It should be noted in the exemplary embodiment that the booster compressor raises the pressure of the intermediate buffer gas 416, injected into the secondary dry gas seal chamber 424, to a predetermined pressure (P3) just below the pressure in the area to be sealed 402. Continuing with the exemplary embodiment, the increased pressure of the intermediate buffer gas reduces the flow of process gas through the primary seal 404 and prevents contamination and icing of the primary seal 404. The exemplary embodiment booster compressor 426 operates in a discontinuous fashion, performing ON/OFF cycles. Next, the exemplary embodiment booster compressor 426 is turned on and the pressure into the secondary seal chamber 424 rises until it reaches the pressure P3 and the booster compressor 426 is turned off. The exemplary embodiment continues with the pressure in the secondary seal chamber 424 slowly dropping, because of leakage of buffer gas through the secondary seal 406. Continuing with the exemplary embodiment, when the pressure in the chamber 424 between the primary seal 404 and the secondary seal 406 drops below a predetermined value (P3 - dP3), the booster compressor 426 is turned on. Further, it should be noted in the exemplary embodiment that when the pump returns to operating conditions and barrier fluid 418 pressure rises above the pressure in the area to be sealed 402 the booster compressor 426 is finally turned off.

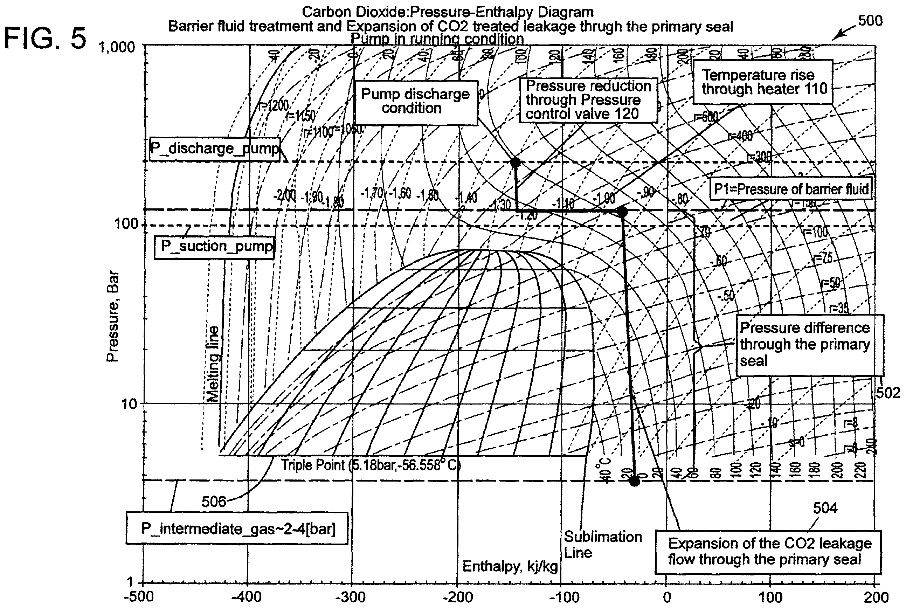

Turning now to FIG. 5, in a pressure-enthalpy diagram 500 illustrated is the pressure reduction of the barrier fluid through the control valve 120, the temperature rise of the barrier fluid through the heater 110 and the expansion of the treated leakage flow through the primary seal to the primary vent with the pump in running condition. The temperature in the exemplary embodiment is high enough to avoid flushing and icing during the expansion.

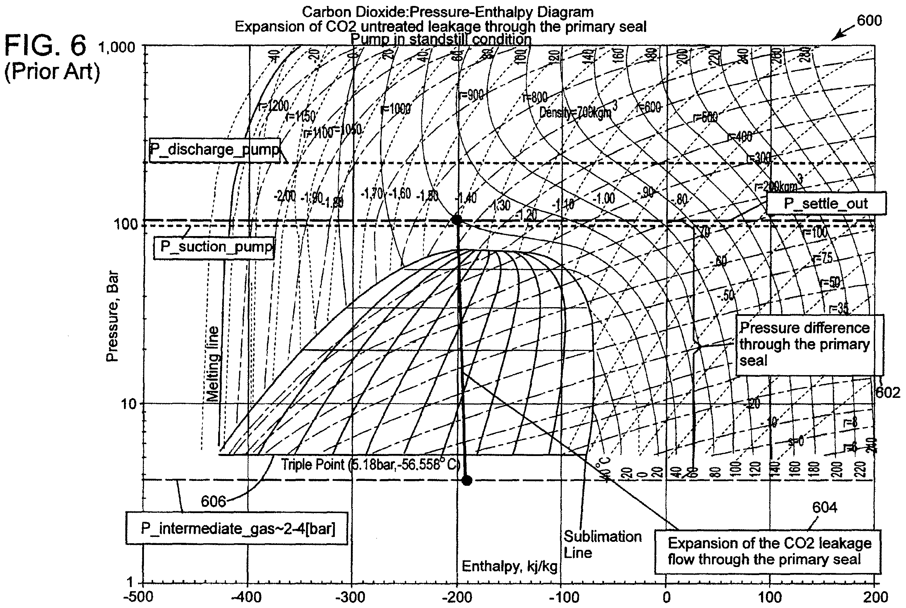

Continuing now to FIG. 6, a carbon dioxide pressure-enthalpy diagram 600 of a prior art exemplary embodiment dry gas seal system in a standstill operating condition is presented. The prior art exemplary embodiment illustrates the pressure difference 602 occurring through the primary seal 604 during a standstill condition. In another aspect of the prior art exemplary embodiment, the enthalpy diagram 600 depicts the expansion 604 of the untreated carbon dioxide leakage flow through the primary seal and crossing the triple point 606 and the bi-phase zones of the diagram for carbon dioxide. Accordingly, the prior art exemplary embodiment indicates that icing will occur in and around the primary seal and will lead to premature failure of the primary seal.

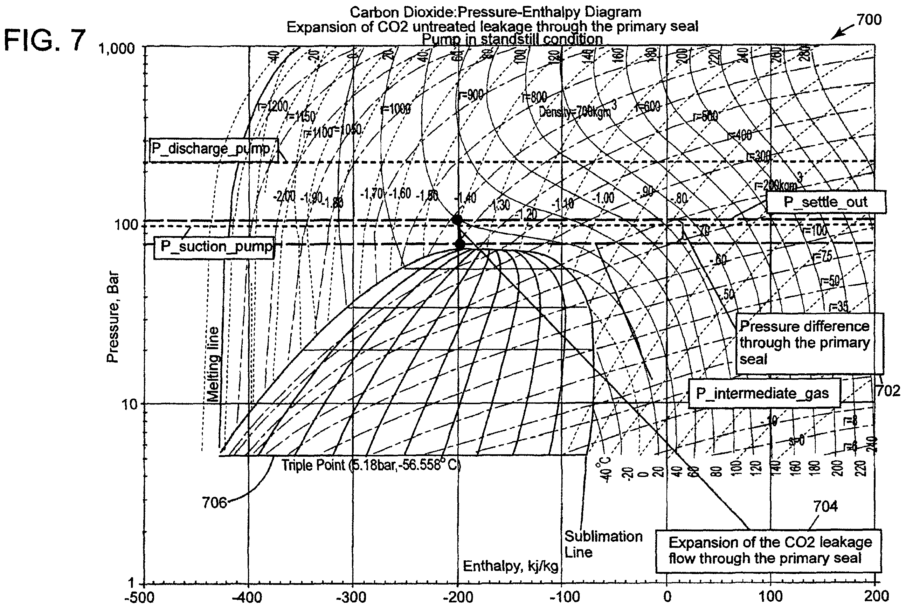

Looking now to FIG. 7, an exemplary embodiment of a carbon dioxide pressure - enthalpy diagram 700 of a dry gas seal system in a standstill operating condition is presented. The exemplary embodiment illustrates the pressure difference 702 occurring through the primary seal during a standstill condition. In another aspect of the exemplary embodiment, the enthalpy diagram 700 depicts the expansion 704 of the untreated carbon dioxide leakage flow through the primary seal and not crossing the triple point 706 and neither bi-phase zone of the diagram for carbon dioxide. Accordingly, the exemplary embodiment indicates that icing will not occur in and around the primary seal.

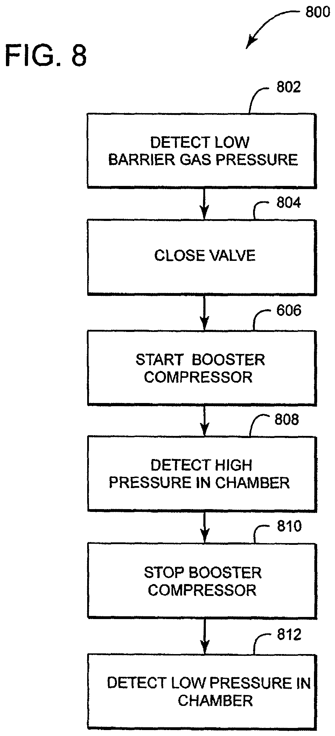

Continuing now to FIG. 8, an exemplary method embodiment 800 for assuring a safe working condition of the dry gas seal and preventing flushing and/or icing when the pump or compressor is in a standstill condition is depicted. Starting at exemplary method embodiment step 802, the pressure of the barrier fluid in the chamber upstream of the primary seal is measured. In this exemplary method embodiment, the measured barrier fluid pressure is compared to a preconfigured value and an indication is generated if the measured barrier fluid pressure is below the preconfigured value.

Next at exemplary method embodiment step 804, if the indication is presented that the barrier fluid pressure is below the preconfigured value then a valve associated with the dry gas seal and a flare-safe area is closed. In one aspect of the exemplary method embodiment, the valve prevents the exit of any gas from the chamber between the primary seal and the secondary seal except by passing through the secondary seal. In another aspect of the exemplary method embodiment, closing the valve reduces the volume of intermediate buffer gas required to maintain the desired pressure. Further in the exemplary method embodiment, the intermediate buffer gas can be, but is not limited to, Nitrogen or dry air.

Next at exemplary method embodiment step 806, a booster compressor is started to boost the pressure of the intermediate buffer gas injected into the chamber between the primary seal and the secondary seal. In another aspect of the exemplary method embodiment, the booster compressor is operated to maintain the pressure based on a preconfigured value for the chamber pressure that is near the value of the pressure of the process fluid in the area to be sealed by the dry gas seal. Continuing with the exemplary method embodiment, the preconfigured value can dynamically change based on changes in the pressure of the process fluid in the area to be sealed by the dry gas seal. It should be noted in the exemplary method embodiment that the process fluid can be, but is not limited to, carbon dioxide.

Continuing with the exemplary method embodiment, at step 808 the rise in pressure in the chamber between the primary seal and the secondary seal is monitored until the pressure reaches a specified pressure (P3). Next, at step 810 of the exemplary method embodiment, when the pressure reaches pressure P3, the booster compressor is turned off. Further, at step 812 of the exemplary method embodiment, the pressure is monitored until it falls to a lower specified threshold and the method returns to step 806 and restarts the booster compressor. It should be noted that the exemplary method embodiment continues to cycle in this fashion until the pump/compressor returns to a running condition.

The disclosed exemplary embodiments provide a system and a method for protecting a dry gas seal from at least icing conditions brought on by process fluid expanding through the primary seal of a dry gas seal. It should be understood that this description is not intended to limit the invention. On the contrary, the exemplary embodiments are intended to cover alternatives, modifications and equivalents, which are included in the scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A system for assuring a safe working condition of a dry gas seal, associated with a pump or compressor, during standstill operating conditions, the system comprising:
a controllable valve (412) connected to a chamber between a primary seal and a secondary seal of said dry gas seal, said valve associated with a vent to a flare-safe area;
a compressor (426) configured for boosting the pressure of an intermediate buffer gas injected into said chamber; and **characterized by**
a barrier fluid pressure detector for determining when barrier fluid pressure drops below a preconfigured lower limit and when said pump or compressor, at said standstill operating condition is pressurized at a settle-out pressure; and by
a control system configured for operating said controllable valve (412) and said compressor (426) based on said barrier fluid pressure.

2. The system of claim 1, wherein said controllable valve (412) is associated with a flare line connected to said dry gas seal.

3. The system of claim 1 or claim 2, wherein said barrier fluid is carbon dioxide.

4. The system of any preceding claim, wherein said intermediate buffer gas is Nitrogen.

5. The system of any preceding claim, wherein said intermediate buffer gas is dry air.

6. The system of any preceding claim, wherein said compressor (426) boosts said intermediate buffer gas pressure to a preconfigured pressure when said barrier fluid pressure drops below said preconfigured pressure.

7. The system of any preceding claim, wherein said buffer gas preconfigured pressure is less than a pressure of an area to be sealed associated with said dry gas seal.

8. The system of any preceding claim, wherein said buffer gas preconfigured pressure is greater than a pressure of an area to be sealed associated with said dry gas seal.

9. The system of any preceding claim, wherein the pressure detector is arranged to measure pressure in a chamber (424) between a primary and a secondary seal (404,406).

10. A method for assuring a safe working condition of a dry gas seal associated with a liquefied gas pump or compressor when said liquefied gas pump or compressor is in a transient operating condition, said method comprising:
detecting a barrier fluid pressure below a preconfigured value with a barrier fluid pressure detector for determining when barrier fluid pressure drops below a preconfigured lower limit and when said pump or compressor, at said standstill operating condition is pressurized at a settle-out pressure;
closing a valve connected to said dry gas seal; and
starting a compressor associated with an intermediate buffer gas and maintaining said buffer gas pressure at said preconfigured value;
wherein a control system is configured for operating said controllable valve (412) and said compressor (426) based on said barrier fluid pressure.

## Patentansprüche

1. System zum Gewährleisten einer sicheren Arbeitsbedingung einer Trockengasdichtung, assoziiert mit einer Pumpe oder einem Kompressor, während Stillstand-Betriebsbedingungen, wobei das System umfasst:
ein steuerbares Ventil (412), verbunden mit einer Kammer zwischen einer primären Dichtung und einer sekundären Dichtung dieser Trockengasdichtung, wobei dieses Ventil mit einer Abzugsöffnung zu einem flammensicheren Bereich assoziiert ist;
einen Kompressor (426), der zum Erhöhen des Drucks eines Zwischenpuffergases, das in diese Kammer injiziert wird, konfiguriert ist; und **gekennzeichnet durch** einen Sperrfluid-Druckdetektor zum Bestimmen, wenn der Druck des Sperrfluids unter einen vorkonfigurierten unteren Schwellenwert fällt und wenn diese Pumpe oder dieser Kompressor bei Stillstand-Betriebsbedingung mit einem Ausgleichsdruck unter Druck gesetzt wird; und **durch**
ein Steuersystem, das zum Betreiben dieses steuerbaren Ventils (412) und dieses Kompressors (426) konfiguriert ist, basierend auf diesem Sperrfluiddruck.

2. System nach Anspruch 1, wobei das steuerbare Ventil (412) mit einer Fackelleitung assoziiert ist, die mit dieser Trockengasdichtung verbunden ist.

3. System nach Anspruch 1 oder Anspruch 2, wobei das Sperrfluid Kohlenstoffdioxid ist.

4. System nach einem der vorangegangenen Ansprüche, wobei das Zwischenpuffergas Stickstoff ist.

5. System nach einem der vorangegangenen Ansprüche, wobei das Zwischenpuffergas Trockenluft ist.

6. System nach einem der vorangegangenen Ansprüche, wobei der Kompressor (426) den Zwischengaspuffer-Druck auf einen vorkonfigurierten Druck erhöht, wenn der Druck des Sperrfluids unter den vorkonfigurierten Druck fällt.

7. System nach einem der vorangegangenen Ansprüche, wobei der vorkonfigurierte Druck des Puffergases geringer ist als ein Druck eines abzudichtenden Bereichs, der mit der Trockengasdichtung assoziiert ist.

8. System nach einem der vorangegangenen Ansprüche, wobei der vorkonfigurierte Druck des Zwischenpuffergases größer ist als der Druck eines abzudichtenden Bereichs, der mit der Trockengasdichtung assoziiert ist.

9. System nach einem der vorangegangenen Ansprüche, wobei der Druckdetektor angeordnet ist, um den Druck in einer Kammer (424) zwischen einer primären und einer sekundären Dichtung (404, 406) zu messen.

10. Verfahren zum Gewährleisten einer sicheren Arbeitsbedingung einer Trockengasdichtung, die mit einer(m) Flüssiggaspumpe oder -kompressor assoziiert ist, wenn diese(r) Flüssiggaspumpe oder -kompressor in einem transienten Betriebszustand ist, wobei dieses Verfahren umfasst:
Erfassen eines Drucks eines Sperrfluids unter einem vorkonfigurierten Wert mit einem Sperrfluid-Druckdetektor zum Bestimmen, wenn der Druck des Sperrfluids unter einen vorkonfigurierten unteren Schwellenwert fällt und wenn diese Pumpe oder dieser Kompressor bei Stillstand-Betriebsbedingung mit einem Ausgleichsdruck unter Druck gesetzt wird;
Schließen eines Ventils, das mit der Trockengasdichtung verbunden ist; und
Starten eines Kompressors, der mit einem Zwischenpuffergas assoziiert ist, und Halten des Drucks des Puffergases auf dem vorkonfigurierten Wert;
wobei ein Steuersystem konfiguriert ist, um das steuerbare Ventil (412) und den Kompressor (426) zu steuern, basierend auf dem Druck des Sperrfluids.

## Revendications

1. Système permettant d'assurer une condition de travail sûre d'un joint étanche au gaz sec associé à une pompe ou à un compresseur au cours de conditions de fonctionnement à l'arrêt, le système comprenant :
une soupape ajustable (412) raccordée à une chambre entre un joint étanche primaire et un joint étanche secondaire dudit joint étanche au gaz sec, ladite soupape étant associée avec une purge à une zone à l'abri des torches ;
un compresseur (426) configuré pour renforcer la pression d'un gaz tampon intermédiaire injecté dans ladite chambre ; et **caractérisé par** un détecteur de pression de fluide barrière pour déterminer à quel moment la pression du fluide barrière chute en dessous d'une limite inférieure préconfigurée et à quel moment ladite pompe ou ledit compresseur, dans ledit état de fonctionnement à l'arrêt, est placé(e) à une pression d'équilibre ; et par un système de commande configuré pour faire fonctionner ladite soupape ajustable (412) et ledit compresseur (426) sur la base de ladite pression du fluide barrière.

2. Système selon la revendication 1, dans lequel ladite soupape ajustable (412) est associée à une ligne de torche raccordée audit joint étanche au gaz sec.

3. Système selon la revendication 1 ou la revendication 2, dans lequel ledit fluide barrière est du dioxyde de carbone.

4. Système selon l'une quelconque des revendications précédentes, dans lequel ledit gaz tampon intermédiaire est de l'azote.

5. Système selon l'une quelconque des revendications précédentes, dans lequel ledit gaz tampon intermédiaire est de l'air sec.

6. Système selon l'une quelconque des revendications précédentes, dans lequel ledit compresseur (426) renforce ladite pression de gaz tampon intermédiaire à une pression préconfigurée lorsque ladite pression de fluide barrière chute en dessous de ladite pression configurée.

7. Système selon l'une quelconque des revendications précédentes, dans lequel ladite pression configurée du gaz tampon est inférieure à une pression d'une zone à sceller associée audit joint étanche au gaz sec.

8. Système selon l'une quelconque des revendications précédentes, dans lequel ladite pression préconfigurée du gaz tampon est supérieure à une pression d'une zone à sceller associée audit joint étanche au gaz sec.

9. Système selon l'une quelconque des revendications précédentes, dans lequel le détecteur de pression est agencé pour mesurer la pression dans une chambre (424) entre un joint étanche primaire et un joint étanche secondaire (404, 406).

10. Procédé permettant d'assurer un état de travail sûr d'un joint étanche au gaz sec associé à une pompe ou un compresseur à gaz liquéfié lorsque ladite pompe ou ledit compresseur à gaz liquéfié se trouve dans un état de fonctionnement transitoire, ledit procédé comprenant :
la détection d'une pression de fluide barrière en dessous d'une valeur préconfigurée avec un détecteur de pression de fluide barrière pour déterminer à quel moment la pression du fluide barrière chute en dessous d'une limite inférieure préconfigurée et à quel moment ladite pompe ou ledit compresseur, audit état de fonctionnement d'arrêt, est placé sous une pression d'équilibre ;
la fermeture d'une soupape raccordée audit joint étanche au gaz sec ; et
le démarrage d'un compresseur associé à un gaz tampon intermédiaire et le maintien de ladite pression de gaz tampon à ladite valeur préconfigurée ;
dans lequel un système de commande est configuré pour actionner ladite soupape ajustable (412) et ledit compresseur (426) sur la base de ladite pression du fluide barrière.
